# EUROPÄISCHE PATENTSCHRIFT

(11) **EP 1 288 604 B1**
(45) Veröffentlichungstag und Bekanntmachung des Hinweises auf die Patenterteilung: **14.10.2009**
(21) Anmeldenummer: 02017009.8
(22) Anmeldetag: 27.07.2002
(51) Int. Cl.: F28D 9/00

(54) **Kühler und Verfahren zum Kühlen eines Mediums**
Cooler and process for cooling a medium
Refroidisseur et procédé de refroidissement d'un fluide

(30) Priorität: 24.08.2001 DE 10141490
(43) Veröffentlichungstag der Anmeldung: 05.03.2003
(73) Patentinhaber: Behr GmbH & Co. KG, 70469 Stuttgart (DE)
(72) Erfinder: Emrich, Karsten, 70197 Stuttgart (DE)
(74) Vertreter: Grosse, Rainer

(56) Entgegenhaltungen:
- EP-A- 0 581 644
- US-A- 2 423 175
- US-A- 5 014 775
- US-A- 5 050 668
- PATENT ABSTRACTS OF JAPAN vol. 1999, no. 01, 29. Januar 1999 (1999-01-29) -& JP 10 281014 A (CALSONIC CORP), 20. Oktober 1998 (1998-10-20)

## Beschreibung

Die Erfindung betrifft einen Kühler mit Mitteln zum Führen eines Kühlmediums, Mitteln zum Führen eines zu kühlenden Mediums und einem im Wesentlichen axialsymmetrischen Gehäuse. Die Erfindung betrifft weiterhin ein Verfahren zum Kühlen eines Mediums, bei dem ein Kühlmedium und ein zu kühlendes Medium einem im Wesentlichen axialsymmetrischen Gehäuse geführt werden. "

Gattungsgemäße Kühler und gattungsgemäße Verfahren werden beispielsweise bei der Ladeluftvorkühlung eines Abgasturboladers verwendet. Derartige Ladeluftkühler dienen dazu, die vom Turbolader verdichtete Luft vor dem Eintritt in den Motor eines Kraftfahrzeugs zu kühlen. Es gibt eine Vielzahl unterschiedlicher Ausführungsformen derartiger Kühler, die sich im Hinblick auf zahlreiche Merkmale stark unterscheiden. Beispielsweise kennt man kastenförmige Kühler oder auch Kühler mit axialsymmetrischem Gehäuse, wobei letztere beispielsweise als Rohrbündelkühler ausgelegt sind.

Bei den unterschiedlichen Ausführungsformen treten, insbesondere im Zusammenhang mit dem Ziel einer Erhöhung der Kühlleistung, unterschiedliche Probleme auf. Will man beispielsweise bei einem flächigen Kühler die Kühlleistung erhöhen, so ist dies erreichbar, indem man den Kühler senkrecht zur Strömungsrichtung des zu kühlenden Mediums vergrößert. Damit benötigt der Kühler aber einen vergrößerten Bauraum, was grundsätzlich von Nachteil ist. Bei einem runden Kühler, wie zum Beispiel einem Rohrbündelkühler, kann die Kühlleistung dadurch erhöht werden, dass der Kühler in axialer Richtung vergrößert wird. Nachteilig an dieser Lösung ist allerdings, dass es zu einem vergrößerten Druckabfall innerhalb des Kühlers kommt.

Aus der JP-10281014 geht ein Kühler hervor, bei dem ein zu kühlendes Medium Knickblechanordnungen durchströmt. Dies führt zu parallelen Teilströmen, die beidseitig einer Mittelhalbierenden ausgehen und zum jeweiligen Kühlerrandbereich strömen. Aus der US-5014775 geht ein Ölkühler hervor, bei dem ein zu kühlendes Medium radial zwischen Scheibenanordnungen strömt, wobei die von einem Kühlmedium durchströmten Scheibenanordnungen parallele zackenrippen zur Oberflächenvergrößerung aufweisen.

Der Erfindung liegt die **Aufgabe** zugrunde, einen Kühler und ein Verfahren zum Kühlen eines Mediums zur Verfügung zu stellen, welche die genannten Nachteile des Standes der Technik umgehen, wobei insbesondere eine Erhöhung des Druckabfalls innerhalb des Kühlers vermieden werden soll und weiterhin keine negativen Einflüsse im Hinblick auf den Bauraum des Kühlers entstehen.

Diese Aufgabe wird mit den Merkmalen der unabhängigen Ansprüche gelöst. Vorteilhafte Ausführungsformen der Erfindung sind in den abhängigen Ansprüchen angegeben.

Die Erfindung baut auf dem gattungsgemäßen Kühler dadurch auf, dass die Mittel zum Führen des zu kühlenden Mediums so angeordnet sind, dass das zu kühlende Medium in mindestens einem ersten Bereich in im Wesentlichen axialer Richtung strömt und dass das zu kühlende Medium in mindestens einem zweiten Bereich in einer Richtung mit radialer Komponente strömt. Bei einem derartigen Kühler ist eine Erhöhung der Kühlleistung dadurch erreichbar, dass der Kühler in axialer Richtung vergrößert wird. Bei der Verwendung des Kühlers als Ladeluftkühler ist es daher lediglich erforderlich, einen Teil der ohnehin vorhandenen Leitungen in axialer Richtung durch die Vergrößerung des Kühlers zu ersetzen. Weiterhin kommt es bei einer derartigen axialen Vergrößerung des Kühlers aber nicht zu dem erwünschten erhöhten Druckabfall in dem Kühler; dies wird durch die Strömungsumleitung innerhalb des Kühlers erreicht, die sicherstellt, dass das zu kühlende Medium nicht in der gesamten Länge des Kühlers Kühlflächen umströmen muss, wie dies zum Beispiel bei einem Rohrbündelkühler der Fall ist.

Bei dem erfindungsgemäßen Kühler ist vorgesehen, dass das zu kühlende Medium in einem radial innen liegenden Bereich in axialer Richtung in den Kühler einströmt und dass das zu kühlende Medium in einer Richtung mit radialer Komponente aus einem Kühlbereich des Kühlers ausströmt. Der Kühler kann also gleichzeitig in vorteilhafter Weise dazu eingesetzt werden, ein mit einem Turbolader verbundenes Rohr mit einem vergleichsweise engen Durchmesser mit einer anderen Leitung am Eingang des Ladeluft/Luftkühlers zu verbinden, die einen größeren Durchmesser aufweist. Mit dem Kühler erreicht man demnach zusätzlich zu seiner kühlenden Wirkung einen Querschnittsübergang.

Ferner ist bei der vorliegenden Erfindung vorgesehen, dass eine Vielzahl von im Wesentlichen axialsymmetrischen Scheiben übereinander geschichtet sind, dass die Scheiben als Scheibenpaare angeordnet sind, die in Umfangrichtung verlaufende Führungen für das Kühlmedium bilden, dass die Scheiben Durchgangsöffnungen aufweisen, so dass durch die übereinander geschichteten Scheiben ein axialer Kanal gebildet wird, und dass zwischen den Scheibenpaaren Kühlrippen angeordnet sind, die von dem zu kühlenden Medium im Wesentlichen senkrecht zur Achse der Anordnung durchströmt werden. Eine derartige Scheibe-Rippe-Scheibe-Anordnung ist aufgrund ihrer fertigungstechnischen Einfachheit besonders vorteilhaft.

Im Zusammenhang mit der Scheibe-Rippe-Scheibe-Bauform ist vorgesehen, dass die Kühlrippen auf Radius gelegte Wellrippen sind. Hierdurch gelingt es, eine radial gerichtete Strömung des zu kühlenden Mediums durch die Rippen sicherzustellen, so dass letztlich der gesamte zur Kühlung zur Verfügung stehende Bereich auch tatsächlich zur Kühlung genutzt wird.

Die Erfindung baut auf dem gattungsgemäßen verfahren dadurch auf, dass das zu kühlende Medium in mindestens einem ersten Bereich in im Wesentlichen axialer Richtung strömt und dass das zu kühlende Medium in mindestens einem zweiten Bereich in einer Richtung mit radialer Komponente strömt. Auf diese weise werden die vorteile und Merkmale des erfindungsgemäßen Kühlers auch im Rahmen eines Verfahrens realisiert. Dies gilt auch für die nachfolgend angegebenen Verfahrensschritte.

Bei dem erfindungsgemäßen Verfahren ist vorgesehen, dass das zu kühlende Medium in einem radial innen liegenden Bereich in axialer Richtung in den Kühler einströmt und dass das zu kühlende Medium in einer Richtung mit radialer Komponente aus einem Kühlbereich des Kühlers ausströmt. Der Strömungsquerschnitt wird auf diese Weise geändert.

Es ist vorgesehen, dass das zu kühlende Medium von im Wesentlichen axialer Strömungsrichtung in eine radiale Strömungsrichtung umgelenkt wird. Es finden zwei Strömungsrichtungsänderungen von 90° statt. Diese starken Richtungsänderungen können insbesondere im Hinblick auf die Ausbildung des Kühlers in Scheibe-Rippe-Scheibe-Bauform in Kauf genommen werden.

Die Erfindung betrifft weiterhin eine Verwendung eines erfindungsgemäßen Kühlers als Ladeluft-Vorkühler.

Weiterhin ist der erfindungsgemäße Kühler vorteilhaft als Abgaskühler einsetzbar.

Es kann ebenfalls nützlich sein, den erfindungsgemäßen Kühler als Ölkühler zu verwenden.

Weiterhin ist es nützlich, den erfindungsgemäßen Kühler als Kraftstoffkühler einzusetzen.

Der Erfindung liegt die Erkenntnis zugrunde, dass Kühler mit Querschnittsübergang und ansonsten äußerst belastbaren Eigenschaften zur Verfügung gestellt werden können. Es gelingt, die Wärmetauscherfläche durch Vergrößerung des Kühlers in Primärströmungsrichtung bei gleichzeitiger Reduktion des Druckabfalls zu verwirklichen.

Die Erfindung wird nun mit Bezug auf die begleitenden Zeichnungen anhand bevorzugter Ausführungsformen beispielhaft erläutert.

Dabei zeigt:
- Figur 1: einen nicht erfindungsgemäßen Kühler in perspektivischer Darstellung;
- Figur 2: eine teilweise aufgeschnittene zweite Ausführungsform eines nicht erfindungsgemäßen Kühlers in perspektivischer Darstellung;
- Figur 3: einen vergrößerten Teil des Kühlers gemäß Figur 2;
- Figur 4: eine Schnittansicht eines Teils des Kühlers gemäß den Figuren 2 und 3;
- Figur 5: eine schematische Darstellung zur Erläuterung einer ersten Anordnung von Leitblechen/Rippenblechen;
- Figur 6: eine schematische Darstellung zur Erläuterung einer zweiten Anordnung von Leitblechen/Rippenblechen;
- Figur 7: eine schematische Darstellung zur Erläuterung einer dritten Anordnung von Leitblechen;
- Figur 8: eine teilweise aufgeschnittene Ausführungsform eines erfindungsgemäßen Kühlers in perspektivischer Darstellung;
- Figur 9: einen vergrößerten Teil des Kühlers gemäß Figur 8;
- Figur 10: eine perspektivische Darstellung einer Scheibe zur Verwendung in einem Kühler gemäß Figur 8 und Figur 9;
- Figur 11: eine Draufsicht auf eine erste Kühlrippenanordnung zur Verwendung in einem erfindungsgemäßen Kühler gemäß den Figuren 8 und 9;
- Figur 12: eine Draufsicht auf eine zweite Kühlrippenanordnung zur Verwendung in einem nicht erfindungsgemäßen Kühler gemäß den Figuren 8 und 9;
- Figur 13: ein erstes Verwendungsbeispiel erfindungsgemäßer Kühler;
- Figur 14: ein zweites Verwendungsbeispiel erfindungsgemäßer Kühler;
- Figur 15: eine schematische Darstellung eines Lande-Vorkühlsystems mit einem erfindungsgemäßen Kühler; und
- Figur 16: eine schematische Darstellung eines Doppelkühlers unter Verwendung erfindungsgemäßer Kühler.

Bei der nachfolgenden Beschreibung der Ausführungsbeispiele bezeichnen gleiche Bezugszeichen gleiche oder vergleichbare Komponenten. Zur Erläuterung der Erfindung wird davon ausgegangen, dass es sich bei dem zu kühlenden Medium um Luft handelt. Die Ausführungen gelten jedoch gleichermaßen auch für andere zu kühlende Medien.

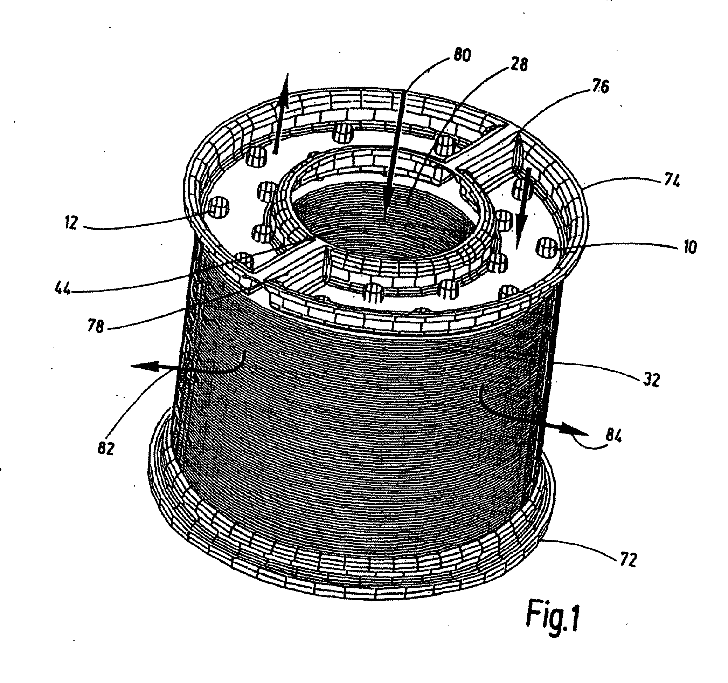

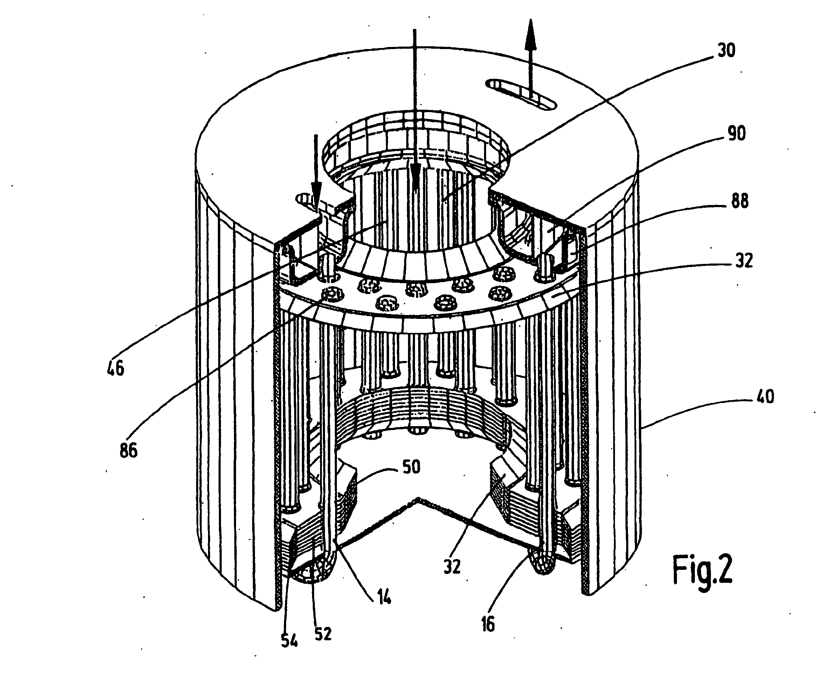

Figur 1 zeigt eine erste Ausführungsform eines Kühlers in perspektivischer Darstellung. Der Kühler weist eine Vielzahl übereinandergeschichteter Leitbleche 32 auf, die in einem innen liegenden Bereich eine Öffnung 44 als Mittel 28 zum Führen eines zu kühlenden Mediums freigeben. Der Kühler ist an der Unterseite durch einen Kühlmittelkasten 72 begrenzt. An der Oberseite ist ein Kasten 74 vorgesehen. Das Innere des oberen Kastens 74 ist mit zwei Trennelementen 76, 78 ausgestattet. In den rechten Teil des Kastens 74 wird Kühlmedium eingeführt. Dem linken Teil des Kastens 74 wird Kühlmedium entnommen. Aus dem rechten Teil des Kastens 74 gelangt das Kühlmedium in die Öffnungen 10, die sich in axialer Richtung durch den Kühler in Form von Rohren fortsetzen. Aus Rohren 12, die sich ebenfalls in axialer Richtung durch den Kühler fortsetzen, gelangt das erwärmte Kühlmedium in den linken Teil des Kastens 74. Der untere Kasten 72 ist so ausgebildet, dass in diesen das Kühlmedium aus den Rohren 10 abgegeben wird, sich dort nach Belieben ausbreiten kann, das heißt es sind keine den Elementen 76, 78 im oberen Kasten 74 entsprechende Begrenzungen vorgesehen, und dann durch die Rohre 12 nach oben in den oberen Kasten 74 strömen kann. Die Leitbleche 32 sind so ausgebildet, dass die in axialer Richtung 80 in den Kühler eintretende Luft in radiale Richtungen 82, 84 austritt. Die Leitbleche/Rippenbleche 32 dieser Ausführungsform können in ähnlicher weise geformt sein, wie die im Zusammenhang mit den Figuren 2, 3, 4, 5, 6 und 7 erläuterten Leitbleche.

Figur 2 zeigt eine teilweise aufgeschnittene zweite Ausführungsform eines Kühlers in perspektivischer Darstellung. Der Kühler gemäß Figur 2 kann auf seiner gesamten inneren axialen Länge mit Leitblechen 32 ausgestattet sein, wobei vorliegend nur einige im unteren Bereich angeordnete Leitbleche 32 und ein im oberen Bereich angeordnetes Leitblech 32 dargestellt sind. Der Kühler ist von einem Gehäuse 40 umgeben. Im oberen Bereich des Gehäuses ist ein Kasten 88 angeordnet, der eine in Umfangrichtung verlaufende Trennung 90 aufweist. In den radial innen liegenden Teil des Kastens 88 wird Kühlmedium eingeleitet, dem radial außen liegenden Teil des Kastens 88 wird Kühlmedium entnommen. Das in den Kasten eingeleitete Kühlmedium gelangt durch die Rohre 14, die sich axial nach unten in den Kühler erstrecken, in den Bereich der Leitbleche 32. Im unteren Bereich sind die Rohre 14 gekrümmt, und sie gehen in den mit dem Bezugszeichen 16 gekennzeichneten Teil der Rohre über. Diese Rohre 16 münden dann in den radial außen liegenden Bereich des Kastens 88, aus dem das Kühlmedium wieder entnommen werden kann. Die vorliegende Ausführungsform kommt daher im Gegensatz zu der Ausführungsform gemäß Figur 1 ohne einen unteren Kasten aus. Allerdings sind gekrümmte Rohre 14, 16 erforderlich. Die Kühlbleche 32 haben eine Vielzahl von Öffnungen 86, durch welche die Rohre 14, 16 hindurchtreten können. Weiterhin geben die Kühlbleche 32 einen radial innen liegenden Bereich 46 frei, der als Mittel 30 zum Führen eines Kühlmediums dient. Aus diesem Bereich wird das zu kühlende Medium in radialer Richtung durch die Bereiche 50, 52, 54 in Richtungen mit radialer Komponente umgelenkt.

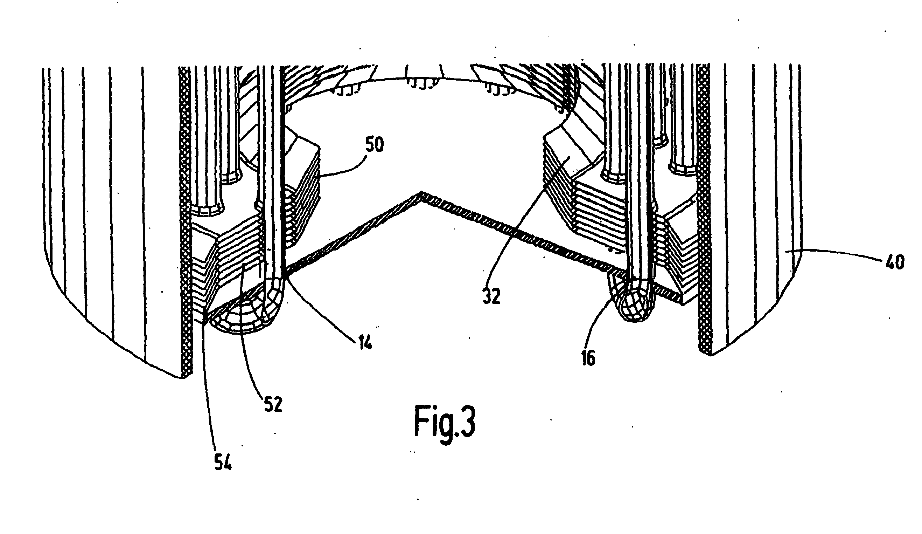

Figur 3 zeigt einen vergrößerten Teil des Kühlers gemäß Figur 2.

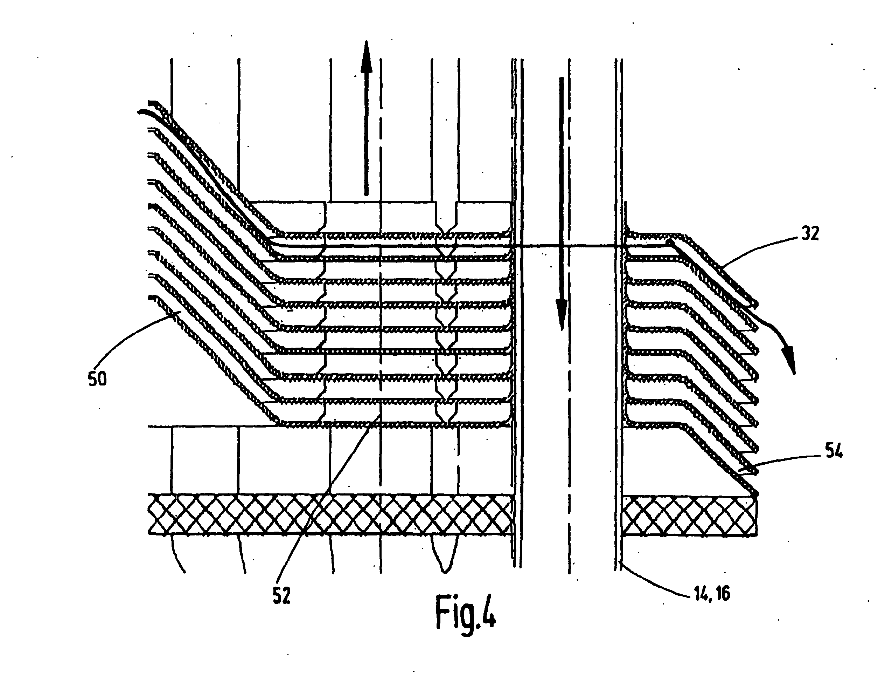

Figur 4 zeigt eine Schnittansicht eines Teils des Kühlers gemäß den Figuren 2 und 3, wobei der Schnitt in axialer Richtung ausgeführt ist. Die in axialer Richtung in den Kühler eingetretene Luft wird in die Bereiche 50 der Leitbleche 32 umgelenkt, gelangt dann in den radial verlaufenden Bereich 52, wozu sie wiederum umgelenkt wird, umströmt dann das Rohr 14, 16, und wird dann nochmals umgelenkt, um in den Bereich 54 der Leitbleche 32 zu gelangen. Von dort aus verlässt das zu kühlende Medium den Kühler dann in gekühlter Form. Die Leitbleche 32 sind an dem Rohr 14, 16 befestigt.

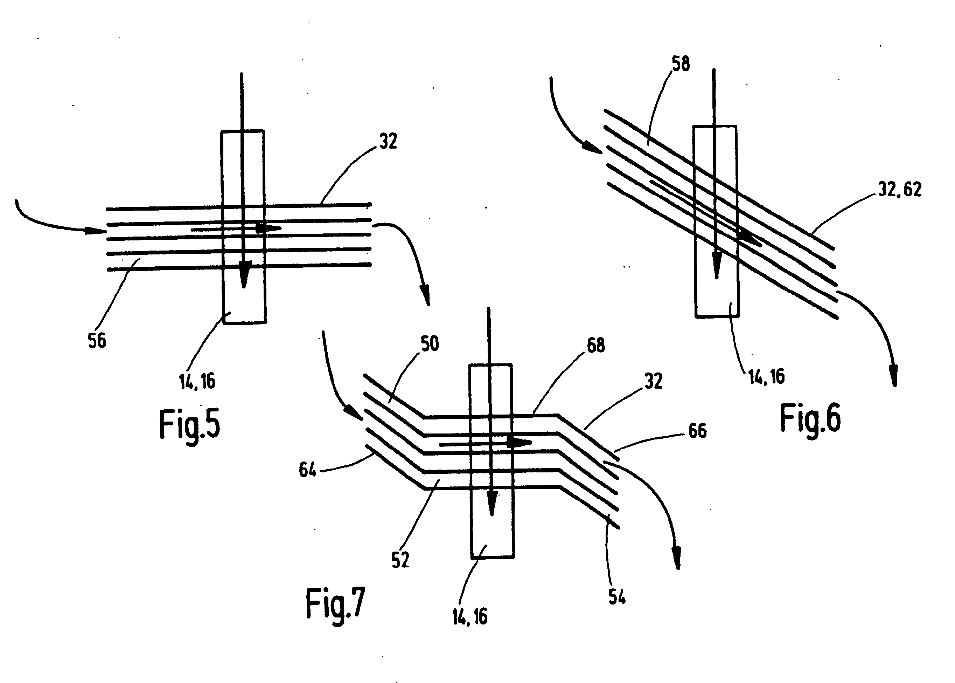

Figur 5 zeigt eine schematische Darstellung zur Erläuterung einer ersten Anordnung von Leitblechen. Diese Ausführungsform ist besonders einfach in der Herstellung, da nur einfache kreisscheibenförmige Leitbleche/Rippenbleche 32 verwendet werden. Allerdings hat diese Ausführungsform den strömungstechnischen Nachteil zweier Umlenkungen von 90° in den Strömungsweg 56 beziehungsweise aus den Strömungsweg 56 heraus.

Figur 6 zeigt eine schematische Darstellung zur Erläuterung einer zweiten Anordnung von Leitblechen. Diese Ausführungsform ist strömungstechnisch zu bevorzugen, da nur zwei Umlenkungen um 45° durch die nach Art eines Kegelmantels 62 ausgebildeten Leitbleche 32 in die Strömungswege 58 beziehungsweise aus den Strömungswegen 58 heraus erfolgen. Allerdings ist diese Ausführungsform fertigungstechnisch problematisch, denn die Befestigung der Leitbleche 32 an den Rohren 14, 16 ist aufgrund der gewinkelten Stellung aufwendig.

Figur 7 zeigt eine schematische Darstellung zur Erläuterung einer dritten Anordnung von Leitblechen. Diese Ausführungsform stellt einen Kompromiss zwischen strömungstechnischen Anforderungen und möglichst einfacher Herstellbarkeit dar. Die Leitbleche 32 weisen jeweils einen ersten Bereich 64, einen zweiten Bereich 66 und einen dritten Bereich 68 auf. Der erste und der zweite Bereich sind jeweils nach Art eines Kegelmantels geformt. Der zwischen diesen Bereichen 64, 66 liegende Bereich 68 ist radial ausgerichtet. Somit entstehen Strömungswege mit drei Bereichen 50, 52, 54, so dass zwar vier Umlenkungen, jedoch jeweils nur um 45° erforderlich sind. Die so geformten Leitbleche 32 sind aufgrund ihrer senkrechten Anordnung bezüglich der Rohre 14, 16 in einfacher Weise an diesen zu befestigen.

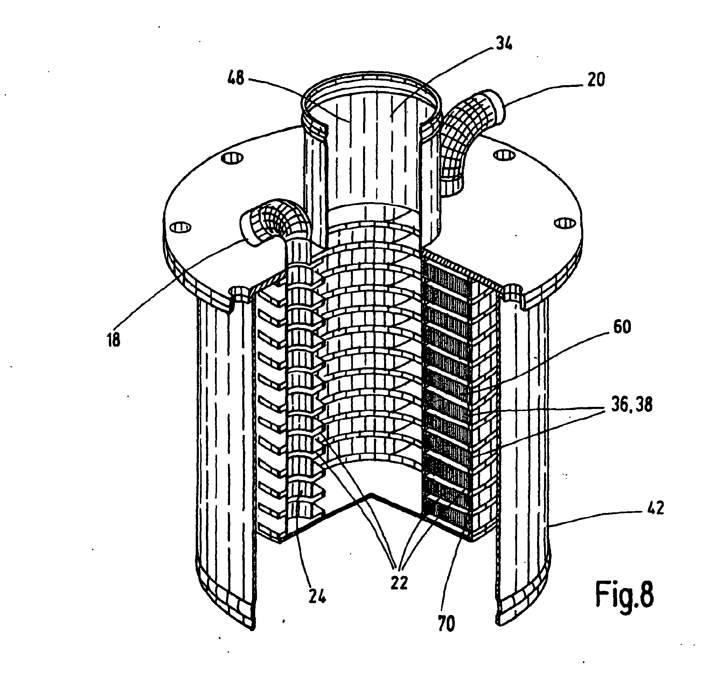

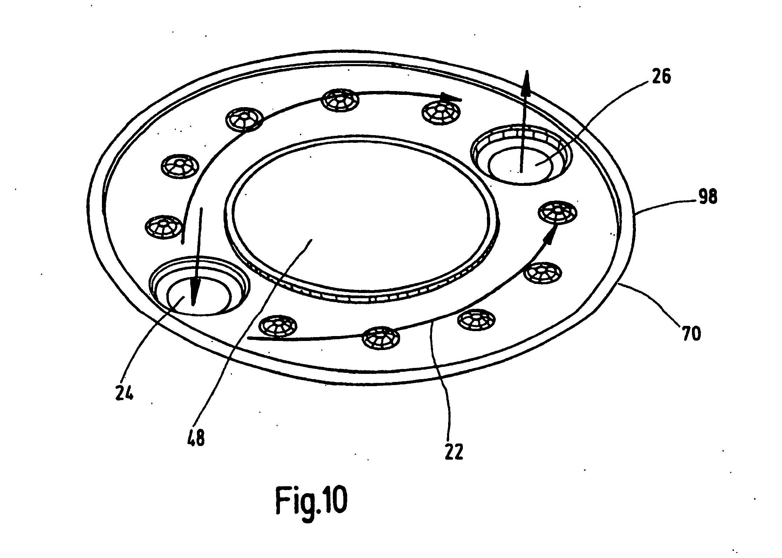

Figur 8 zeigt eine teilweise aufgeschnittene Ausführungsform eines erfindungsgemäßen Kühlers in perspektivischer Darstellung. Bei dieser Ausführungsform eines erfindungsgemäßen Kühlers ist innerhalb eines Gehäuses 42 eine Vielzahl von Scheiben 70 angeordnet. Eine einzelne solche Scheibe ist in Figur 10 gezeigt. In den Kühler kann Kühlflüssigkeit durch eine Öffnung 18 eingeführt werden. Diese gelangt dann in einen Kanal 24, der durch Öffnungen in den Scheiben 70 gebildet ist. Die Scheiben sind so angeordnet, was weiter unten mit Bezug auf Figur 10 näher erläutert werden wird, dass in Umfangrichtung verlaufende Kanäle 72 gebildet werden. Die in den Kanal 24 eingeleitete Kühlflüssigkeit kann sich somit in Umfangrichtung durch die Kanäle 22 verteilen und durch die Öffnung 20 wieder aus dem Kühler austreten. Zwischen den jeweils paarweise angeordneten Scheiben 70 sind Kühlrippen 36, 38 angeordnet. In die Öffnung 48, die als Mittel 34 zum Führen des einströmenden zu kühlenden Mediums dient, eintretende Luft kann somit in die Bereiche 60 eintreten und radial nach außen strömen.

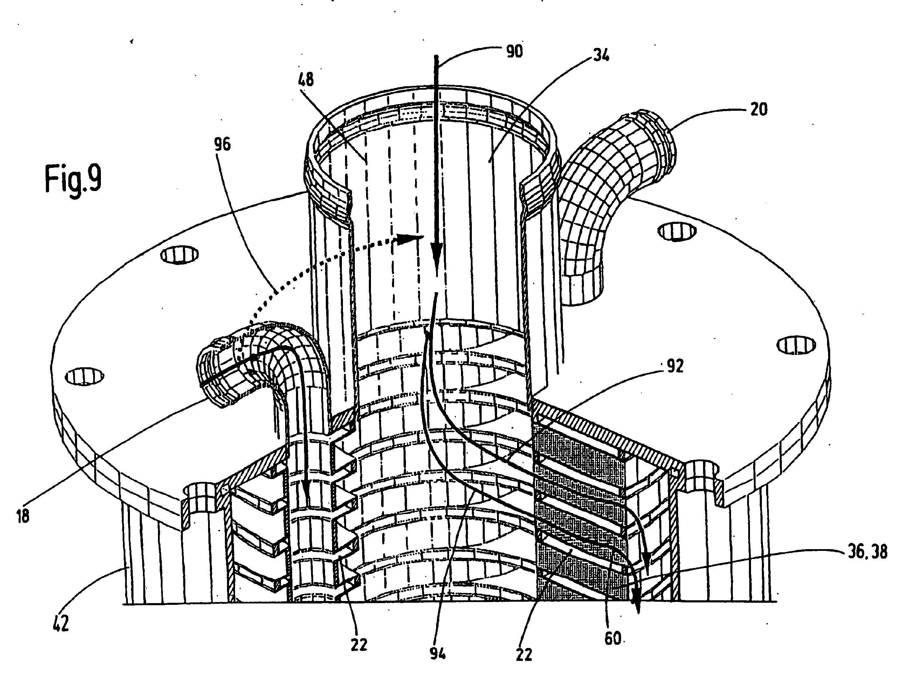

Figur 9 zeigt einen vergrößerten Teil des Kühlers gemäß Figur 8. Hier sind anhand der Pfeile die einzelnen Strömungsrichtungen genauer dargestellt. Der Pfeil 90 kennzeichnet die Strömungsrichtung der einströmenden Luft. Die Pfeile 92, 94 kennzeichnen das Umlenken der Luft und deren Strömungsrichtung senkrecht zur Achse der Anordnung in dem Bereich 60. Der Pfeil 96 kennzeichnet die Strömung des Kühlmediums in Umfangrichtung durch die Kanäle 22.

Figur 10 zeigt eine perspektivische Darstellung einer Scheibe zur Verwendung in einem Kühler gemäß Figur 8 und Figur 9. Die Scheibe 70 hat zwei Öffnungen 24, 26. Eine Öffnung 24 wird in die eine Richtung von Kühlmedium durchströmt; die andere Öffnung 26 wird in die andere Richtung von Kühlmedium durchströmt. Die radial äußere Begrenzung der Scheibe 70 ist tellerrandartig. Legt man nun eine Scheibe derselben Bauart umgekehrt auf die in Figur 10 dargestellte Scheibe, so dass sich die Ränder 98 der Scheiben berühren, so wird zwischen den Scheiben der Kanal 22 gebildet. Legt man weiterhin auf die oben liegende Scheibe 70 eine weitere Scheibe 70 in derselben Orientierung wie die erste Scheibe 70 und so weiter, so wird nach und nach ein aus Scheibenpaaren bestehender Stapel von Scheiben gebildet, die zwei durchgängige axial verlaufende Kanäle aufgrund der Öffnungen 24, 26 bilden. Zwischen die Scheibenpaare werden Kühlrippen gelegt, die den senkrecht zur Achse der Anordnung verlaufenden Luftstrom bewirken.

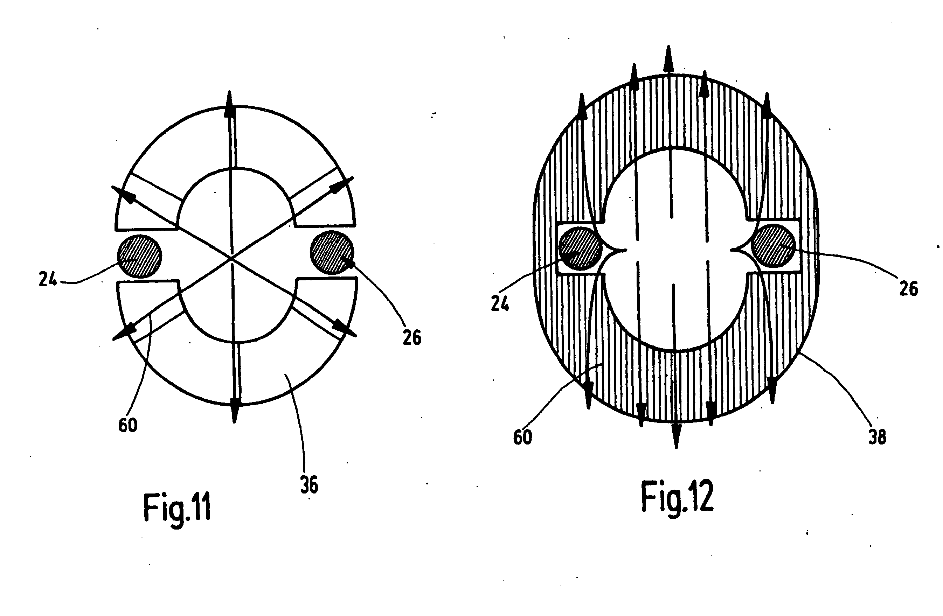

Figur 11 zeigt eine Draufsicht auf eine erste Kühlrippenanordnung zur verwendung in einem Kühler gemäß den Figuren 8 und 9. Es sind die beiden Kanäle 24, 26 für das Kühlmedium gezeigt. Die auf Radius gelegten Wellrippen 36 stellen sicher, dass ein radialer Verlauf der Kühlluft möglich ist. Allerdings kann eine solche Anordnung fertigungstechnisch problematisch sein, da die auf die Radius gelegte Anordnung der Wellrippen 36 eine Spannung in den Wellrippen verursacht. Es ist daher erforderlich die Wellrippen bei der Montage sicher an den Scheiben zu befestigen.

Figur 12 zeigt eine Draufsicht auf eine zweite Kühlrippenanordnung zur Verwendung in einem nicht erfindungsgemäßen Kühler gemäß den Figuren 8 und 9. Hier ist eine fertigungstechnisch einfachere Lösung dargestellt. Es sind Rippenbleche 38 vorgesehen. Allerdings ist diese Lösung strömungstechnisch problematisch, da gewisse Bereiche nicht von zu kühlendem Medium durchströmt werden, beispielsweise die bezüglich den Kanälen 24, 26 außen liegenden Bereiche.

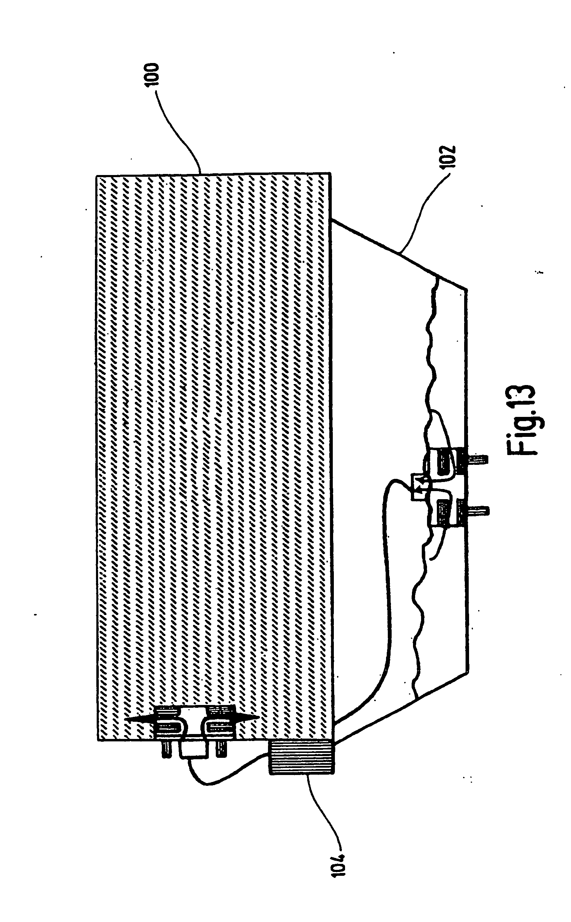

Figur 13 zeigt ein erstes Verwendungsbeispiel erfindungsgemäßer Kühler. Es sind ein Motor 100, eine Ölwanne 102 und eine Ölpumpe 104 dargestellt. Bei einer ersten Ausführungsform ist ein erfindungsgemäßer Kühler in der ölwanne 102 angeordnet. In einer weiteren Ausführungsform ist ebenfalls ein erfindungsgemäßer Kühler außerhalb der Ölwanne vorgesehen.

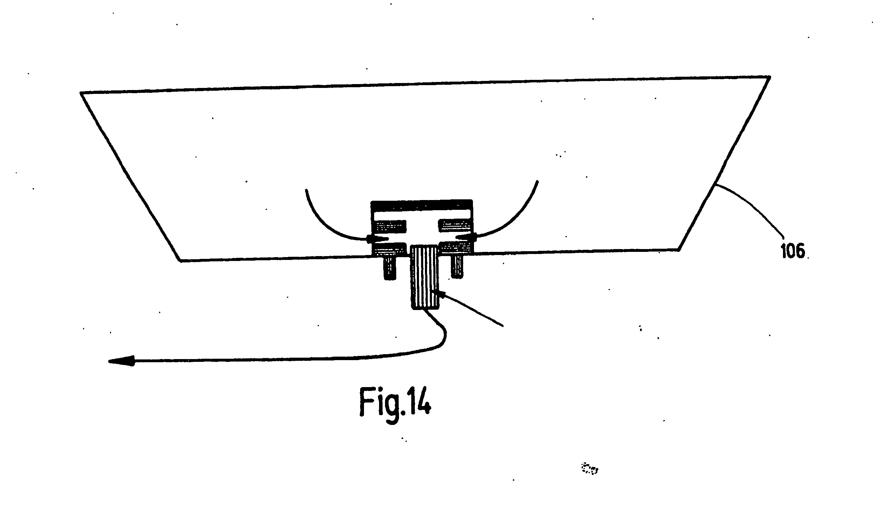

Figur 14 zeigt ein zweites Verwendungsbeispiel erfindungsgemäßer Kühler. Hier ist ein Kraftstofftank 106 mit einem integrierten, beispielsweise eingegossenen Kühler dargestellt.

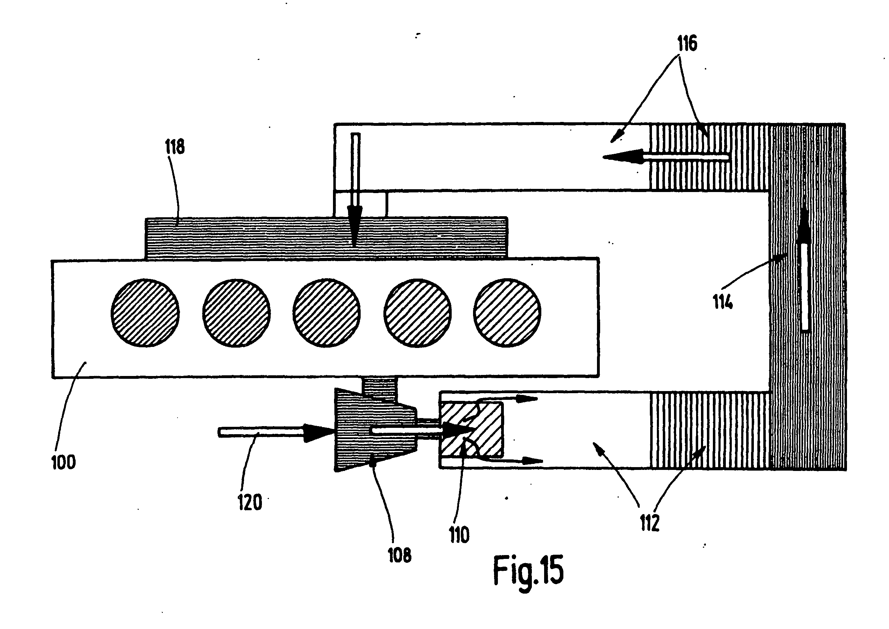

Figur 15 zeigt eine schematische Darstellung eines Lade-Vorkühlsystems mit einem erfindungsgemäßen Kühler 110. Das System umfasst einen Motor 100, einen Lader 108, einen erfindungsgemäßen Kühler 110, eine Ladeluftleitung 112, ein Ladeluft/Luftkühler 114, eine Ladeluftleitung 116 sowie einen Luftsammler 118 zum Eintritt von Luft in den Motor 100. Die zu kühlende Luft beziehungsweise gekühlte Luft ist durch Pfeile 120 dargestellt.

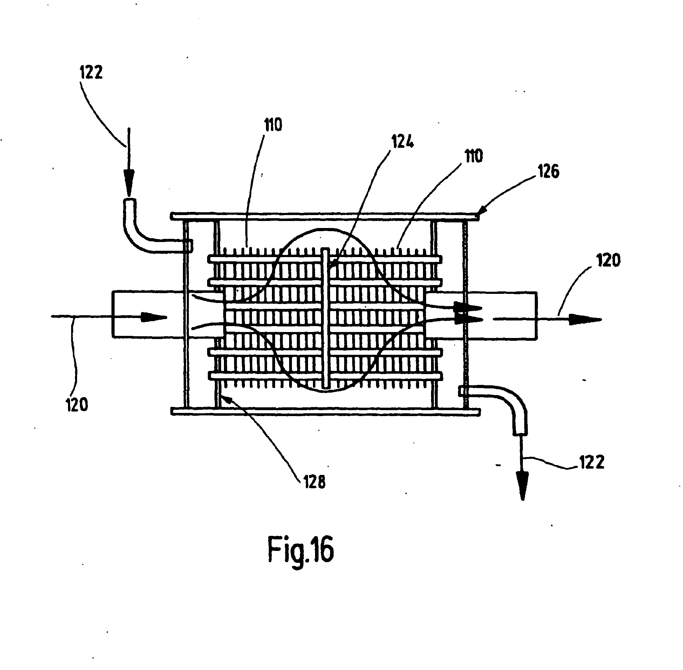

Figur 16 zeigt eine schematische Darstellung eines Doppelkühlers unter Verwendung erfindungsgemäßer Kühler 110. Das System besteht aus zwei Kühlern 110, die durch ein Trennblech 124 voneinander getrennt sind. Der Doppelkühler ist durch ein Mantelrohr 126 umgeben. Innerhalb des Mantelrohrs sind Boden und Wasserkasten 128 vorgesehen. Das zu kühlende beziehungsweise das gekühlte Medium ist durch Pfeile 120 bezeichnet. Das Kühlmedium ist durch Pfeile 122 bezeichnet.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder den Zeichnungen offenbarte Merkmalskombinationen zu beanspruchen.

In Unteransprüchen verwendete Rückbeziehungen weisen auf die weitere Ausbildung des Gegenstandes des Hauptanspruchs durch die Merkmale des jeweiligen Unteranspruchs hin; sie sind nicht als ein Verzicht auf die Erzielung eines selbständigen, gegenständlichen Schutzes für die Merkmalskombinationen der rückbezogenen Unteransprüche zu verstehen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen beziehungsweise Elementen oder Verfahrensschritten für den Fachmann im Hinblick auf die Lösung der Aufgabe entnehmbar sind und durch kombinierbare Merkmale zu einen neuen Gegenstand oder zu neuen Verfahrensschritten beziehungsweise Verfahrensschrittfolgen führen.

## Patentansprüche

1. Kühler mit
- Mitteln (10,12,14,16,18,20,22,24,26) zum Führen eines Kühlmediums,
- Mitteln (28, 30, 32, 34, 36, 38) zum Führen eines zu kühlenden Mediums und
- einem im Wesentlichen axialsymmetrischen Gehäuse (40,42),
wobei
- die Mittel (10,12,14,16,18,20,22,24,26) zum Führen des zu kühlenden Mediums so angeordnet sind, dass
- das zu kühlende Medium in mindestens einem ersten Bereich (44,46,48) in im Wesentlichen axialer Richtung strömt und dass
- das zu kühlende Medium in mindestens einem zweiten Bereich (50, 52, 54, 56, 58, 60) in einer Richtung mit radialer Komponente strömt,
und wobei
- eine Vielzahl von im Wesentlichen axialsymmetrischen Scheiben (70) übereinander geschichtet sind, wobei
- Scheibenpaare von mit sich berührenden, tellerrandartigen Rändern umgekehrt aufeinander gelegten Scheiben (70) gebildet sind und
- die Scheibenpaare in Umfangsrichtung verlaufende Führungen (22) für das Kühlmedium bilden, wobei
- die Scheiben (70) Durchgangsöffnungen (24) aufweisen, so dass durch die übereinander geschichteten Scheiben ein axialer Kanal gebildet wird, und
- zwischen den Scheibenpaaren Kühlrippen (36,38) angeordnet sind, die von dem zu kühlenden Medium im Wesentlichen senkrecht zur Achse der Anordnung durchströmt werden,
**dadurch gekennzeichnet, dass**
- die Kühlrippen auf Radius gelegte Wellrippen (36) sind, die an den Scheiben (70) befestigt sind und
- die auf Radius gelegten Wellrippen (36) einen radialen Verlauf des Kühlmediums sicherstellen.

2. Kühler nach Anspruch 1, **dadurch gekennzeichnet, dass**
- das zu kühlende Medium in einem radial innen liegenden Bereich (44,46,48) in axialer Richtung in den Kühler einströmt und dass
- das zu kühlende Medium in einer Richtung mit radialer Komponente aus einem Kühlbereich des Kühlers ausströmt.

3. Verfahren zum Kühlen eines Mediums, bei dem ein Kühlmedium und ein zu kühlendes Medium in einem im Wesentlichen axialsymmetrischen Gehäuse (40,42) geführt werden, wobei
- das zu kühlende Medium in mindestens einem ersten Bereich (44,46,48) in im Wesentlichen axialer Richtung strömt und
- das zu kühlende Medium in mindestens einem zweiten Bereich (50,52,54,56,58,60) in einer Richtung mit radialer Komponente strömt,
und wobei
- eine Vielzahl von im Wesentlichen axialsymmetrischen Scheiben (70) übereinander geschichtet werden, wobei
- Scheibenpaare von mit sich berührenden, tellerrandartigen Rändern umgekehrt aufeinander gelegten Scheiben (70) gebildet werden und
- die Scheibenpaare in Umfangsrichtung verlaufende Führungen (22) für das Kühlmedium bilden, wobei
- die Scheiben (70) Durchgangsöffnungen (24) aufweisen, so dass durch die übereinander geschichteten Scheiben ein axialer Kanal gebildet wird, und
- zwischen den Scheibenpaaren Kühlrippen (36,38) angeordnet sind, die von dem zu kühlenden Medium im Wesentlichen senkrecht zur Achse der Anordnung durchströmt werden,
**dadurch gekennzeichnet, dass**
- die Kühlrippen auf Radius gelegte Wellrippen (36) sind, die an den Scheiben (70) befestigt werden und
- die auf Radius gelegten Wellrippen (36) einen radialen Verlauf des Kühlmediums sicherstellen.

4. Verfahren nach Anspruch 3, **dadurch gekennzeichnet, dass**
- das zu kühlende Medium in einem radial innenliegenden Bereich (44,46,48) in axialer Richtung in den Kühler einströmt und dass
- das zu kühlende Medium in einer Richtung mit radialer Komponente aus einem Kühlbereich des Kühlers ausströmt.

5. Verfahren nach einem der Ansprüche 3 oder 4, **dadurch gekennzeichnet, dass** das zu kühlende Medium von im Wesentlichen axialer Strömungsrichtung in eine radiale Strömungsrichtung umgelenkt wird.

6. Verwendung eines Kühlers nach einem der Ansprüche 1 oder 2 als Ladeluft-Vorkühler.

7. Verwendung eines Kühlers nach einem der Ansprüche 1 oder 2 als Abgaskühler.

8. Verwendung eines Kühlers nach einem der Ansprüche 1 oder 2 als Ölkühler.

9. Verwendung eines Kühlers nach einem der Ansprüche 1 oder 2 als Kraftstoffkühler.

## Claims

1. Cooler with
- means (10, 12, 14, 16, 18, 20, 22, 24, 26) for carrying a cooling medium,
- means (28, 30, 32, 34, 36, 38) for carrying a medium to be cooled, and
- an essentially axially symmetrical housing (40, 42),
wherein
- the means (10, 12, 14, 16, 18, 20, 22, 24, 26) for carrying the medium to be cooled are arranged such that
- the medium to be cooled flows in essentially axial direction in at least a first area (44, 46, 48), and that
- the medium to be cooled flows in a direction with a radial component in at least a second area (50, 52, 54, 56, 58, 60),
and wherein
- a plurality of essentially axially symmetrical disks (70) are layered on top of each other, wherein
- disk pairs are formed of disks (70) with touching, plate-rim type edges invertedly placed on top of each other, and
- the disk pairs form guides (22) running in circumferential direction for the cooling medium, wherein
- the disks (70) have passage openings (24) so that an axial channel is formed through the disks layered on top of each other, and
- cooling fins (36, 38) are arranged between the disk pairs which are flowed through by the medium to be cooled essentially perpendicularly to the axis of the arrangement, **characterized in that**
- the cooling fins are corrugated fins (36) laid on radius which are fastened on the disks (70), and
- the corrugated fins (36) laid on radius ensure a radial course of the cooling medium.

2. Cooler according to claim 1, **characterized in that**
- the medium to be cooled flows in axial direction into the cooler in a radially interior area (44, 46, 48), and
- the medium to be cooled flows out from a cooling area of the cooler in a direction with a radial component.

3. Method for cooling a medium in which a cooling medium and a medium to be cooled are carried in an essentially axially symmetrical housing (40, 42), wherein
- the medium to be cooled flows in essentially axial direction in at least a first area (44, 46, 48), and
- the medium to be cooled flows in a direction with a radial component in at least a second area (50, 52, 54, 56, 58, 60),
and wherein
- a plurality of essentially axially symmetrical disks (70) are layered on top of each other, wherein
- disk pairs are formed of disks (70) with touching, plate-rim type edges invertedly placed on top of each other, and
- the disk pairs form guides (22) running in circumferential direction for the cooling medium, wherein
- the disks (70) have passage openings (24) so that an axial channel is formed through the disks layered on top of each other, and
- cooling fins (36, 38) are arranged between the disk pairs which are flowed through by the medium to be cooled essentially perpendicularly to the axis of the arrangement, **characterized in that**
- the cooling fins are corrugated fins (36) laid on radius which are fastened on the disks (70), and
- the corrugated fins (36) laid on radius ensure a radial course of the cooling medium.

4. Method according to claim 3, **characterized in that**
- the medium to be cooled flows in axial direction into the cooler in a radially interior area (44, 46, 48), and
- the medium to be cooled flows out from a cooling area of the cooler in a direction with a radial component.

5. Method according to any one of the claims 3 or 4, **characterized in that** the medium to be cooled is deflected from an essentially axial direction of flow to a radial direction of flow.

6. Use of a cooler according to any one of the claims 1 or 2 as a charge-air pre-cooler.

7. Use of a cooler according to any one of the claims 1 or 2 as an exhaust gas cooler.

8. Use of a cooler according to any one of the claims 1 or 2 as an oil cooler.

9. Use of a cooler according to any one of the claims 1 or 2 as a fuel cooler.

## Revendications

1. Radiateur avec
- des moyens (10, 12, 14, 16, 18, 20, 22, 24, 26) pour guider un milieu de refroidissement,
- des moyens (28, 30, 32, 34, 36, 38) pour guider un milieu à refroidir et
- un logement (40, 42) à symétrie essentiellement axiale,
- les moyens (10, 12, 14, 16, 18, 20, 22, 24, 26) pour guider le milieu à refroidir étant disposés de sorte que
- le milieu à refroidir s'écoule dans au moins une première zone (44, 46, 48) dans une direction essentiellement axiale et que
- le milieu à refroidir s'écoule dans au moins une seconde zone (50, 52, 54, 56, 58, 60) dans une direction avec une composante radiale,
et
- une pluralité de disques (70) à symétrie essentiellement axiale étant superposés,
- des paires de disques étant formées par des disques (70) posés l'un sur l'autre à l'envers avec des bords se touchant, de type bord d'assiette et
- les paires de disques formant des guides (22) s'étendant dans la direction périphérique pour le milieu de refroidissement,
- les disques (70) présentant des ouvertures de passage (24) de sorte qu'un canal axial est formé par les disques superposés, et
- des ailettes de refroidissement (36, 38) étant disposées entre les paires de disques, lesquelles sont parcourues par le milieu à refroidir essentiellement perpendiculairement à l'axe de l'agencement, **caractérisé en ce que**
- les ailettes de refroidissement sont des ailettes ondulées (36) situées sur le rayon qui sont fixées aux disques (70) et
- les ailettes ondulées (36) situées sur le rayon garantissent un écoulement radial du milieu de refroidissement.

2. Radiateur selon la revendication 1, **caractérisé en ce que**
- le milieu à refroidir arrive dans le radiateur dans une zone (44, 46, 48) située à l'intérieur radialement dans la direction axiale et que
- le milieu à refroidir sort d'une zone de refroidissement du radiateur dans une direction avec une composante radiale.

3. Procédé de refroidissement d'un milieu, dans lequel un milieu de refroidissement et un milieu à refroidir sont guidés dans un logement (40, 42) à symétrie essentiellement axiale,
- le milieu à refroidir s'écoulant dans au moins une première zone (44, 46, 48) dans une direction essentiellement axiale et
- le milieu à refroidir s'écoulant dans au moins une seconde zone (50, 52, 54, 56, 58, 60) dans une direction avec une composante radiale,
et
- une pluralité de disques (70) à symétrie essentiellement axiale étant superposés,
- des paires de disques étant formées par des disques (70) posés l'un sur l'autre à l'envers avec des bords se touchant, de type bord d'assiette et
- les paires de disques formant les guides (22) s'étendant dans la direction périphérique pour le milieu de refroidissement,
- les disques (70) présentant des ouvertures de passage (24) de sorte qu'un canal axial est formé par les disques superposés, et
- des ailettes de refroidissement (36, 38) étant disposées entre les paires de disques, lesquelles sont parcourues par le milieu à refroidir essentiellement perpendiculairement à l'axe de l'agencement, **caractérisé en ce que**
- les ailettes de refroidissement sont des ailettes ondulées (36) situées sur le rayon qui sont fixées aux disques (70) et
- les ailettes ondulées (36) situées sur le rayon garantissent un écoulement radial du milieu de refroidissement.

4. Procédé selon la revendication 3, **caractérisé en ce que**
- le milieu à refroidir arrive dans le radiateur dans une zone (44, 46, 48) située à l'intérieur radialement dans la direction axiale et que
- le milieu à refroidir sort d'une zone de refroidissement du radiateur dans une direction avec une composante radiale.

5. Procédé selon l'une quelconque des revendications 3 ou 4, **caractérisé en ce que** le milieu à refroidir passe d'une direction d'écoulement essentiellement axiale à une direction d'écoulement radiale.

6. Utilisation d'un radiateur selon l'une quelconque des revendications 1 ou 2 en tant que précondenseur d'air de charge.

7. Utilisation d'un radiateur selon l'une quelconque des revendications 1 ou 2 en tant que radiateur à gaz d'échappement.

8. Utilisation d'un radiateur selon l'une quelconque des revendications 1 ou 2 en tant que radiateur à huile.

9. Utilisation d'un radiateur selon l'une quelconque des revendications 1 ou 2 en tant que radiateur à carburant.
